Europäisches Patentamt

European Patent Office

Office européen des brevets

(19)

(11) Veröffentlichungsnummer : **0 123 880**
**B1**

(12) **EUROPÄISCHE PATENTSCHRIFT**

(45) Veröffentlichungstag der Patentschrift :
20.08.86

(21) Anmeldenummer : 84103145.3

(22) Anmeldetag : 22.03.84

(51) Int. Cl.⁴ : **C 08 G 18/81, C 25 D 13/06,**
**C 09 D 3/72, C 09 D 3/49**

(54) Hitzehärtbare Überzugsmittel und ihre Verwendung.

(30) Priorität : 30.03.83 DE 3311513

(43) Veröffentlichungstag der Anmeldung :
07.11.84 Patentblatt 84/45

(45) Bekanntmachung des Hinweises auf die Patenterteilung : 20.08.86 Patentblatt 86/34

(84) Benannte Vertragsstaaten :
AT BE CH DE FR GB IT LI NL SE

(56) Entgegenhaltungen :
GB-A- 1 261 313

(73) Patentinhaber : BASF Lacke + Farben Aktiengesellschaft
Max-Winkelmann-Strasse 80 Postfach 61 23
D-4400 Münster-Hiltrup (DE)

(72) Erfinder : Schupp, Eberhard, Dr.
Tilsiter Weg 4
D-6830 Schwetzingen (DE)
Erfinder : Loch, Werner, Dr.
In der Bleiche 2
D-6701 Erpolzheim (DE)
Erfinder : Osterloh, Rolf, Dr.
Am Wehrhaus 16 a
D-6718 Gruenstadt (DE)
Erfinder : Ahlers, Klaas, Dr.
Foehrenweg 21
D-4400 Muenster (DE)

(74) Vertreter : Welzel, Dr. Gunther et al
c/o BASF Aktiengesellschaft Carl-Bosch-Strasse 38
D-6700 Ludwigshafen (DE)

EP 0 123 880 B1

Jouve, 18, rue St-Denis, 75001 Paris, France

**Beschreibung**

Die Erfindung betrifft eine neue Art von hitzehärtbaren Überzugsmitteln, welche ohne Säurekatalyse aushärten, insbesondere solche hitzehärtbaren Überzugsmittel, welche basische Gruppen enthalten, so daß sie nach Protonierung mit Säuren wasserdispergierbar werden und durch kathodische Elektrotauchlackierung auf elektrisch leitende Oberflächen aufgebracht werden können.

Kathodische Elektrotauchlacke haben sich auf Grund ihrer guten Eigenschaften, wie gutem Korrosionsschutz und hohem Umgriff, für die Beschichtung von Metallteilen, insbesondere von Automobilkarosserien, bewährt, obwohl sie hohe Einbrennverluste aufweisen und im allgemeinen Einbrenntemperaturen von über 180 °C benötigen.

In der DE-AS 2 057 799 wird ein Verfahren zur kathodischen elektrophoretischen Abscheidung eines in Wasser dispergierten, ionischen, organischen Harzes, welches aus einem positiv geladenen, aminhaltigen Harz und einem blockierten, multifunktionellen Isocyanat besteht, beschrieben. Bei der Vernetzung wird das Blockierungsmittel abgespalten und verläßt den Film, was zu erheblichen Einbrennverlusten führt.

Die DE-OS 2 752 255 bezieht sich auf ein kathodisch abscheidbares Überzugsmittel für das Elektrotauchlackierverfahren, welches u. a. 2 bis 50 Gew.% eines Di- und/oder Triurethans enthält, welches über Urethanbindungen gebundenes Hydroxyethyl(meth) acrylat oder Hydroxypropyl(meth) acrylat enthält. Die in den Beispielen dieser DE-OS aufgezeigten Überzüge müssen bei 180 °C gehärtet werden.

Aufgabe der vorliegenden Erfindung war es, die Nachteile der bestehenden Systeme, nämlich hohe Einbrennverluste und hohe Einbrenntemperatur, zu beseitigen und dabei Filme mit einer besonders hohen Elastizität zu erzeugen. Diese Aufgabe wurde gelöst durch den Einsatz einer speziellen Bindemittelmischung.

Gegenstand der vorliegenden Erfindung sind hitzehärtbare Überzugsmittel, die dadurch gekennzeichnet sind, daß sie als Bindemittel enthalten ein Gemisch aus

(A) 50 bis 95 Gew.% eines Polyadditions-, Polykondensations- oder Polymerisationsprodukts mit einem mittleren Molekulargewicht $M_n$ von 500 bis 10 000, welches im Mittel pro Molekül mindestens zwei OH- und/oder NH-Gruppen besitzt und

(B) 5 bis 50 Gew.% eines Umsetzungsproduktes aus einem Polyisocyanat und einem olefinisch ungesättigten Amin, welches eine sekundäre Aminogruppe und eine Methacrylamidgruppe oder Methacrylestergruppe trägt.

Gegenstand der vorliegenden Erfindung sind auch die Verwendung dieser hitzehärtbaren Überzugsmittel in wasserverdünnbarer protonierter Form als Bindemittel für die kathodische Elektrotauchlackierung, sowie wäßrige Lackbäder die 5 bis 30 Gew.% des erfindungsgemäßen Bindemittelgemisches der Komponenten (A) und (B), sowie gegebenenfalls einen Zusatz von 0,001 bis 5 Gew.%, bezogen auf Bindemittel, Schwermetallsalze als Härtungskatalysatoren enthalten.

Die erfindungsgemäßen Überzugsmittel härten bei Temperaturen von 140 bis 180 °C unter sehr geringen Einbrennverlusten zu harten, elastischen Überzügen aus. Durch Einsatz von Härtungskatalysatoren wie Blei-, Mangan- oder Kobaltsalze lassen sich sogar ohne weiteres Härtungstemperaturen von nur 130 °C erreichen.

Zu den Aufbaukomponenten der erfindungsgemäßen Überzugsmittel ist im einzelnen folgendes zu sagen :

Die als Komponente (A) zu verwendenden Polyadditions-, Polykondensations- oder Polymerisationsprodukte mit einem mittleren Molekulargewicht $M_n$ von 500 bis 10 000 können aus den verschiedensten Verbindungsklassen ausgewählt werden. Wichtig ist allein, daß sie im Mittel mindestens zwei OH- und/oder NH-Gruppen besitzen, wobei unter NH-Gruppen im Sinne der Erfindung solche von primären und/oder sekundären Aminogruppen zu verstehen sind. Bevorzugt soll Komponente (A) einen harzartigen Charakter haben. Beispiele geeigneter Materialien sind Polyester, Alkydharze, Polyether, Polyacrylatharze, Polyurethane, Epoxidharze und ihre Umsetzungsprodukte mit Alkoholen, Mercaptanen oder Aminen. Eine weitere geeignete Verbindungsklasse sind Polydienharze oder -öle, z. B. Polybutadienöle. In diese lassen sich z. B. durch Addition von Mercaptoethanol an einen Teil der Doppelbindungen OH-Gruppen einführen. Eine weitere Möglichkeit, OH-Gruppen einzuführen, ist die Umsetzung mit Maleinsäureanhydrid und nachfolgende Reaktion mit OH-haltigen Aminen wie Ethanolamin oder Diethanolamin. Auch durch Epoxidierung der Polybutadienöle mit Persäuren und anschließender Umsetzung mit Aminen läßt sich die benötigte Derivatisierung durchführen.

Geeignete Polyester sind solche mit einem mittleren Molekulargewicht von 500 bis 10 000 und einer Hydroxylzahl von 25 bis 400 aus aliphatischen und/oder aromatischen Dicarbonsäuren mit 4 bis 10 Kohlenstoffatomen, beispielsweise Bernsteinsäure, Glutarsäure, Adipinsäure, Pimelinsäure, Korksäure, Azelainsäure, Sebacinsäure, Cyclohexandicarbonsäure, Phthalsäure, Isophthalsäure oder Terephthalsäure bzw. deren Derivate und aliphatischen Diolen, wie Ethylenglykol, Diethylenglykol, Triethylenglykol, Polyethylenglykol, Propandiol, Butandiol, Hexandiol, Neopentylglykol oder Hydroxypivalinsäureneopentylglykolester und gegebenenfalls höherwertigen Alkoholen, wie Trimethylolpropan, Glycerin, Erythrit, Pentaerythrit, Trimethylolbenzol oder Trishydroxyethylisocyanurat.

Geeignete Alkydharze sind ähnlich aufgebaut, nur enthalten sie bis 25 Gew.% einer oder mehrerer

2

Monocarbonsäuren wie z. B. Fettsäuren. Auch Alkydharze, welche Glycidylester von verzweigten Carbonsäuren enthalten, können verwendet werden.

Geeignete Polyether sind z. B. aliphatische oder araliphatische Polyether, welche durch Umsetzung von zwei- und/oder mehrwertigen Alkoholen, mit verschiedenen Mengen an Ethylen- und/oder Propylenoxid erhalten werden.

Geeignete Polyacrylate sind OH-gruppenhaltige Polyacrylate mit einer Hydroxylzahl von 25 bis 500. Diese weisen zweckmäßierweise eine Säurezahl < 25, bevorzugt <10 und einen K-Wert nach Fikentscher (3 %ig in Aceton) von 10 bis 40, vorzugsweise von 12 bis 25 auf und enthalten vorzugsweise folgende Monomeren :

10 bis 100 Gew.%, vorzugsweise 20 bis 40 Gew.%, mindestens eines Hydroxy- —$(C_2-C_4)$-alkylesters einer α,β-ethylenisch ungesättigten Carbonsäure, beispielsweise 2-Hydroxyethyl- und Hydroxypropyl(meth) acrylat oder Butandiol-mono(meth) acrylat, 0 bis 90 Gew.%, vorzugsweise 60 bis 80 Gew.%, mindestens einer ethylenisch ungesättigten Verbindung die frei von Carboxyl- und Hydroxylgruppen ist, beispielsweise Vinylaromaten, wie Styrol und Vinyltoluol, Vinylester von Carbonsäuren mit 2 bis 18 Kohlenstoffatomen, wie Vinylacetat und Vinylpropionat, Vinylether von Monoalkanolen mit 1 bis 18 Kohlenstoffen, wie Vinylmethylether und Vinylisobutylether, Ester der Acrylsäure oder Methacrylsäure mit $C_1-C_{12}$-Monoalkanolen, entsprechende Maleinsäure-, Fumarsäure- und Itaconsäurediester, (Meth-)-acrylsäureamid, (Meth-)acrylsäurenitril sowie Gemische dieser Monomeren.

Geeignete Polyurethane sind beispielsweise OH-gruppenhaltige Polyurethane mit einer Hydroxylzahl von 25 bis 600 aus aliphatischen und/oder aromatischen Diisocyanaten, die beispielsweise aus Tetramethylendiisocyanat, Hexamethylendiisocyanat, Isophorondiisocyanat, Diphenylmethandiisocyanat, Toluylendiisocyanat, Naphthylendiisocyanat, 4,4′-Diphenyletherdiisocyanat, sowie gegebenenfalls daraus erhältliche Di- oder Trimere, und aliphatischen Diolen, wie Ethylenglykol, Diethylenglykol, Triethylenglykol, Polyethylenglykole, Propandiol, Butandiol, Hexandiol, Neopentylglykol oder Hydroxypivalinsäureneopentylglykolester und gegebenenfalls höherwertige Alkoholen, wie Trimethylolpropan, Glycerin, Pentaerythrit, Trimethylolbenzol oder Trishydroxyethylisocyanurat erhältlich sind.

Geeignete Epoxidharze sind z. B. Glycidylether, wie sie aus 2,2-Bis-(4-hydroxyphenyl)-propan und Epichlorhydrin hergestellt werden. Diese Epoxidharze können weiter modifiziert sein, z. B. durch Umsetzung mit polyfunktionellen Alkoholen oder SH-Verbindungen. Beispiele solcher zur Modifizierung geeigneter polyfunktioneller Alkohole sind Ethylenglykol, Propylenglykol-1,2, Propylenglykol-1,3 und Butandiol-1,4.

Ist eine Elastifizierung erwünscht, können auch langkettige polyfunktionelle Alkohole oder Mercaptane zur Modifizierung eingesetzt werden. Werden die polyfunktionellen Alkohole oder Mercaptane in größeren als äquivalenten Mengen in Bezug auf die vorhandenen Epoxidgruppen eingesetzt, so entstehen Produkte mit endständigen OH- oder SH-Gruppen. Setzt man dagegen geringere als äquivalente Mengen ein, so entstehen Produkte mit endständigen. Epoxidgruppen, die gegebenenfalls weiter umgesetzt werden können. Während die Umsetzung der Mercaptane mit Epoxidgruppen bereits ohne Katalysator abläuft, ist für die Umsetzung der Alkohole die Verwendung eines Katalysators wie z. B. Dimethylbenzylamin und höherer Temperaturen von etwa 50 bis 150 °C notwendig.

Umsetzungsprodukte von Epoxidharzen mit primären oder sekundären Aminen sind ebenfalls als Komponente (A) einsetzbar. Dabei bietet sich besonders die Umsetzung mit hydroxylgruppenhaltigen Aminen, wie z. B. Ethanolamin, Methylethanolamin und Diethanolamin an.

Werden als Komponente (A) solche Produkte eingesetzt, die ausreichende Mengen an Aminogruppen enthalten, um nach Protonierung mit Säuren wasserlöslich oder wasserdispergierbar zu werden, lassen sich im Kombination mit Komponente (B) wasserdispergierbare Einbrennlackbindemittel herstellen, insbesondere solche, die für die kathodische Elektrotauchlackierung verwendet werden können. Für diesen Zweck können die oben erwähnten Umsetzungsprodukte von Epoxidharzen mit primären oder sekundären Aminen eingesetzt werden.

Viele der für die kathodische Elektrotauchlackierung vorgeschalgenen Trägerharze sind auch als Komponente (A) in den erfindungsgemäßen Bindemitteln einsetzbar, so z. B. die Umsetzungsprodukte phenolischer Mannichbasen mit Epoxidharzen gemäß der DE-PS 2 419 179 oder die Umsetzungsprodukte von kettenverlängerten Epoxidharzen mit sekundären Aminen gemäß der US-PS 4 104 147. Beispiele für erfindungsgemäß verwendbare Komponenten (A) sind auch Umsetzungsprodukte aus einem oder mehreren aromatischen oder aliphatischen Epoxidharzen und einem oder mehreren primären oder sekundären Aminen, Alkydharze sowie Polyacrylate ; wichtig ist nur, daß sie ein mittleres Molekulargewicht $\bar{M}_n$ von 500 bis 10 000 aufweisen und im Mittel pro Molekül mindestens zwei OH- und/oder NH-Gruppen besitzen.

Während es für die Vernetzungsaktivität beim Einbrennen völlig ausreicht, wenn die Komponente (A) lediglich OH- und keine NH-Gruppen enthält, ist es doch häufig vorteilhaft, Produkte einzusetzen, die auch primäre und/oder sekundäre Aminogruppen enthalten, da sich damit wäßrige Elektrotauchlackbäder mit hohen pH-Werten von z. B. 6,5 bis 8,0 herstellen lassen. Durch hohe pH-Werte, vor allem solche nahe pH 7 oder darüber, läßt sich eine Korrosion von Anlagen vermeiden. Eine Möglichkeit, zu als Komponente (A) geeigneten Produkten mit primären und sekundären Aminogruppen zu kommen, ist die Umsetzung von überschüssigen primären Diaminen mit Epoxidharzen und anschließender Abtrennung des überschüssigen Amins bei erhöhter Temperatur und vermindertem Druck.

0 123 880

Als Diamine kommen dafür vor allem solche mit 2 bis 6 Kohlenstoffatomen in Betracht, z. B. Ethylendiamin, 1,2- und 1,3-Diaminopropan, 1,4-Diaminobutan und Hexamethylendiamin. Die Reaktionsprodukte können, falls gewünscht, mit Dicarbonsäuren kettenverlängert werden, z. B. mit Sebazinsäure oder dimerer Fettsäure. Durch das Verhältnis Dicarbonsäure zu Epoxidharz-Aminaddukt kann man das gewünschte Molekulargewicht einstellen, z. B. kann man auf zwei Moleküle Epoxidharz-Aminaddukt 1 Mol dimerer Fettsäure einsetzen.

Eine weitere Möglichkeit, als Komponente (A) geeignete Produkte mit primären Aminogruppen herzustellen, ist der Umsatz von Epoxidharzen mit sekundären Aminen, die geblockte primäre Aminogruppen enthalten. Beispiele für solche Amine sind das Diketimin von Diethylentriamin, das Ketimin von Aminoethylethanolamin und das Ketimin von N-Methyl-ethylendiamin. Die Ketimine lassen sich in einfacher Weise aus den freien Aminen und einem Keton, z. B. Methylisobutylketon, unter Auskreisen von Wasser herstellen. Bei der Umsetzung mit Epoxidharzen reagiert nur die sekundäre Aminogruppe, anschließend kann das Ketimin durch Zugabe von Wasser gespalten werden, wobei sich die freie primäre Aminogruppe zurückbildet. Durch Umsetzung eines Teils der primären Aminogruppen mit Dicarbonsäuren lassen sich auch diese Produkte durch Kettenverlängerung elastifizieren.

Komponente (A) ist im erfindungsgemäßen Bindemittel in einer Menge von 50 bis 95, vorzugsweise 60 bis 85 Gew.%, enthalten.

Als Komponente (B) werden erfindungsgemäß Umsetzungsprodukte aus einem Polyisocyanat und einem olefinisch ungesättigten Amin, welches eine sekundäre Aminogruppe und eine Methacrylamidgruppe oder Methacrylestergruppe trägt, verwendet.

Zur Herstellung der Komponente (B) können beliebige aliphatische, alicyclische und/oder aromatische Polyisocyanate eingesetzt werden. Beispiele geeigneter Polyisocyanate sind Diisocyanate wie Hexamethylendiisocyanat, Isophorondiisocyanat, Cyclohexan-1,4-diisocyanat, Toluylendiisocyanat, 4,4'-Diphenylmethandiisocyanat, Triisocyanate wie biuretisiertes oder isocyanuratisiertes Hexamethylendiisocyanat und das Additionsprodukt von 3 Mol Toluylendiisocyanat an 1 Mol Trimethylolpropan. Auch Isocyanat-Präpolymere, z. B. Additionsprodukte von Diisocyanaten an Polyester- oder Polyetherpolyole, können als Polyisocyanate eingesetzt werden.

Als ungesättigtes Amin, welches eine sekundäre Aminogruppe und eine Methacrylamid- bzw. Methacrylestergruppe trägt, kommt vor allem ein Amin mit folgender allgemeiner Formel in Betracht :

$$\begin{array}{ccc} R_4 & O & CH_3 \\ | & \| & | \\ NH-R_5-X-C-C=CH_2 \end{array}$$

worin $R_4$ einen 3 bis 10 Kohlenstoffatome enthaltenden Kohlenwasserstoffrest, der an dem der NH-Gruppe benachbarten Kohlenstoffatom mindestens eine Verzweigung enthält, z. B. eine Isopropyl-, tert.-Butyl-, Isoamyl-, Ethylhexylgruppe, vorzugsweise eine Isopropyl- bzw. tert.-Butylgruppe, $R_5$ eine Ethylen- oder Propylenkette und X ein Sauerstoffatom oder eine NH-Brücke bedeutet.

Ein Beispiel für ein besonders geeignetes olefinisch ungesättigtes Amin ist Isopropylaminopropylmethacrylamid.

Zur Herstellung der Komponente (B) kann entweder das Amin zum vorgelegten Polyisocyanat oder das Polyisocyanat zum vorgelegten Amin gegeben werden. Die Reaktion läuft bereits bei Raumtemperatur ab, doch kann zur Beschleunigung der Reaktion bis auf ca. 150 °C, bevorzugt bis auf etwa 100 °C erwärmt werden. Sind die Einsatzstoffe und das Reaktionsprodukt bei der Reaktionstemperatur flüssig, so kann ohne Lösungsmittel gearbeitet werden ; im allgemeinen wird man die Reaktion jedoch in einem inerten Lösungsmittel, wie einem Ether, Ester, Keton oder Kohlenwasserstoff durchführen.

Komponente (B) ist im erfindungsgemäßen Bindemittel in einer Menge von 5 bis 50, vorzugsweise 15 bis 40 Gew.%, enthalten.

Zur Herstellung der erfindungsgemaßen Überzugsmittel werden die Komponenten (A) und (B) gemischt. Bei Komponenten mit niedriger Viskosität kann dies in Substanz erfolgen, wobei gegebenenfalls auf Temperaturen bis maximal 130 °C erwärmt werden kann. Produkte höherer Viskosität werden vor der Mischung in organischen Lösungsmitteln gelöst. Dabei können übliche Lösemittel wie Alkohole, Ketone, Ester, Ether, Kohlenwasserstoffe etc. verwendet werden.

Die erfindungsgemäßen Überzugsmittel können, gegebenenfalls mit Zusätzen mit Pigmenten, Hilfsmitteln und Härtungskatalysatoren, durch übliche Methoden, wie Spritzen, Tauchen, Gießen und Rakeln auf Substrate wie Holz, Kunststoff oder Metall aufgebracht werden. Produkte, welche, bedingt durch ihren Gehalt an Aminogruppen, nach Neutralisation mit Säuren, wie z. B. Essigsäure, wasserdispergierbar werden, können auch als wäßrige Dispersion angewandt werden. Derartige erfindungsgemäße hitzehärtbare Überzugsmittel lassen sich in ihrer protonierten Form vorzugsweise als Lackbindemittel für die kathodische Elektrotauchlackierung elektrisch leitender Flächen, z. B. von Metallteilen, Blechen usw. aus Messing, Kupfer, Aluminium, metallisierte Kunststoffe oder mit leitenden Kohlenstoff überzogene Materialien, sowie Eisen und Stahl, die gegebenenfalls chemisch vorbehandelt, z. B. phosphatiert, sind, verwenden. Dabei werden im allgemeinen weitere Zusatzstoffe, wie Pigmente und Hilfsstoffe, zugesetzt.

Für die kathodische Elektrotauchlackierung wird im allgemeinen durch Verdünnen mit Wasser ein

4

O 123 880

Feststoffgehalt von 5 bis 30 Gew.% eingestellt. Die Abscheidung erfolgt üblicherweise bei Temperaturen von 15 bis 40 °C während einer Zeit von 1 bis 5 Minuten und bei pH-Werten von 4,0 bis 8,5, vorzugsweise pH 5,5 bis 8,0, bei Abscheidespannungen von 50 bis 500 Volt. Der zu beschichtende elektrisch leitende Körper wird dabei als Kathode geschaltet. Der abgeschiedene Film bei Temperaturen oberhalb von 130 °C ca. 20 Minuten gehärtet. Bei Lacken ohne Zusätze von Härtungskatalysator sind Temperaturen von etwa 140 bis 180 °C zweckmäßig. Der Härtungskatalysator kann entweder schon zum organisch gelösten Harz zugesetzt werden, der Zusatz kann jedoch auch zum wäßrigen Bad erfolgen, wenn wasserlösliche Salze verwendet werden. Brauchbare Katalysatoren sind Schwermetallsalze, z. B. Salze des Mangans oder Kobalts, auch Bleisalze wirken, vor allem in Kombination mit einem der vorhergenannten Metallsalze, beschleunigend auf die Härtung und ermöglichen somit eine Erniedrigung der Einbrenntemperatur. Die Katalysatoren werden zweckmäßigerweise in Mengen von 5 bis 1 000 ppm Metall, bezogen auf wäßriges Elektrotauchbad, eingesetzt.

Die folgenden Beispiele sollen die Erfindung näher erläutern, ohne sie zu beschränken. Die in den Beispielen genannten Teile und Prozente sind, soweit nicht anders angegeben, Gewichtsteile und Gewichtsprozente.

Herstellung der Komponenten (A) und (B)

Komponente $A_1$ :

400 Teile Hexamethylendiamin werden auf 80 °C erwärmt. Auschließend wird eine 80 %ige Lösung von 400 Teilen eines handelsüblichen Epoxidharzes auf Basis von 2,2-Bis-(4-hydroxyphenyl)-propan mit einem Epoxidäquivalentgewicht von 500 in Toluol zugefügt. Nach Abklingen der anfänglichen exothermen Reaktion läßt man 30 Minuten bei 100 °C ausreagieren. Dann wird überschüssiges Hexamethylendiamin und Toluol im Vakuum abdestilliert, wobei eine Innentemperatur von 180 °C erreicht wird. Anschließend werden in einem Dünnschichtverdampfer bei 0,5 mbar und 180 °C die verbleibenden Spuren von freiem Amin abgezogen. Das Produkt hat eine Aminzahl von 169 mg KOH/g und einen Erweichungspunkt von 95 °C.

Komponente $A_2$ :

200 Teile der Komponente $A_1$, 30 Teile dimerisierte Fettsäure und 20 Teile Xylol werden allmählich unter Auskreisen von Wasser auf 190 °C erhitzt und eine Stunde bei dieser Temperatur gehalten. Nach dem Abkühlen auf 130 °C wird zunächst mit 9 Teilen Butylglykol und danach mit 70 Teilen Isobutanol verdünnt. Das Produkt hat einen Festgehalt von 70 %.

Komponente $A_3$ :

500 Teile eines handelsüblichen Epoxidharzes auf Basis von 2,2-Bis-(4-hydroxyphenyl)-propan mit einem Epoxidäquivalentgewicht von 500 werden bei 100 °C in 100 Teilen Toluol und 51 Teilen Butylglykol gelöst, auf 80 °C gekühlt und mit 105 Teilen Diethanolamin versetzt. Nach Abklingen der Reaktion wird noch 1 Stunde auf 100 °C erhitzt. Das Produkt hat einen Festgehalt von 70 %.

Komponente $B_1$ :

In einem geschlossenen, mit Stickstoff gespülten Gefäß werden 566 Teile Isopropylaminopropylmethacrylamid, 570 Teile Dioxan, 0,3 Teile Hydrochinonmonomethylether und 0,3 Teile Dibutylzinndilaurat auf 90 °C erhitzt. Dann werden 573 Teile eines isocyanuratisierten Hexamethylendiisocyanats mit einem NCO-Gehalt von 22 %, gelöst in 560 Teilen Dioxan, innerhalb von 2 Stunden zugetropft. Danach wird weitere 2 Stunden bei 90 °C gehalten. In dieser Zeit ist der Isocyanatgehalt auf 0 gesunken. Das Produkt hat einen Festgehalt von 50 %.

Komponente $B_2$ :

In einem geschlossenen, mit Stickstoff gespülten, Gefäß werden 86 Teile Isopropylaminopropylmethacrylamid, 83,3 Teile Dioxan, 0,05 Teile Hydrochinonmonomethylether und 0,1 Teile Dibutylzinndilaurat auf 70 °C erwärmt. Dann werden 121 Teile eines Isocyanat-Präpolymeren aus 1 Mol Trimethylolpropan und 3 Mol Toluylendiisocyanat mit einem Isocyanatgehalt von 17,3, gelöst in 40 Teilen Ethylacetat und 83 Teilen Dioxan, innerhalb von 1 Stunde zugetropft. Nach einer weiteren Stunde ist der Isocyanatgehalt auf 0 abgesunken. Das Produkt hat einen Festgehalt von 50 %.

Komponente $B_3$ :

In einem geschlossenen Gefäß werden 566 Teile Isopropylaminopropylmethacrylamid, 475 Teile

5

Dioxan, 0,3 Teile Hydrochinonmonomethylether und 0,3 Teile Dibutylzinndilaurat auf 100 °C erhitzt. Dann wird eine Mischung aus 576 Teilen eines biuretisierten Hexamethylendiisocyanats (z. B. ®Desmodur N der Firma Bayer AG) mit einem Isocyanatgehalt von 21,9 %, 81 Teilen Xylol, 81 Teilen Ethylglykolacetat und 475 Teilen Dioxan innerhalb von 2 Stunden zugetropft und 1 Stunde bei dieser Temperatur gehalten. Der Isocyanatgehalt ist nach dieser Zeit auf 0 abgesunken. Das Produkt hat einen Festgehalt von 50 %.

### Beispiel 1

Herstellung eines konventionell applizierbaren Weißlacks

100 Teile der Komponente $A_1$, 120 Teile Ethylglykol, 60 Teile Butylglykol, 80 Teile Titandioxid und 100 Teile der Komponente $B_1$ wurden unter Erwärmen verrührt und anschliessend in einer Sandmühle bis zu einer Körnigkeit nach DIN 53203 von < 10 μm vermahlen. Nach Abtrennen der Mahlkörper resultierte eine Lacklösung mit einem Festgehalt von 50 %. Diese wurde auf Stahlblech gerakelt (Naßfilmdicke 100 μm) und 20 Minuten bei 150 °C eingebrannt. Es entstand ein hochglänzender, harter und elastischer Lackfilm, der gegen Aceton (100 maliges Hin- und Herreiben mit einem Aceton-getränkten Wattebausch) vollkommen resistent ist.

### Beispiel 2

Es wird wie in Beispiel 1 verfahren, statt 100 Teilen der Komponente $A_1$ werden jedoch 100 Teile der Komponente $A_3$ verwendet. Die Eigenschaften des eingebrannten Lackfilms sind mit denen aus Beispiel 1 weitgehend identisch.

Die Beispiele 3 bis 5 betreffen den Einsatz der erfindungsgemäßen hitzehärtbaren Überzugsmittel als kathodisch abscheidbare Elektrotauchlacke.

### Beispiel 3

100 Teile der Komponente $A_3$, 60 Teile der Komponente $B_1$ und 2,2 Teile Essigsäure werden gemischt.

### Beispiel 4

100 Teile der Komponente $A_3$, 60 Teile der Komponente $B_2$ und 2,2 Teile Essigsäure werden gemischt.

### Beispiel 5

Es wird ein Bindemittel hergestellt, indem 100 Teile der Komponente $A_3$ mit 60 Teilen der Komponente $B_3$ gemischt werden. Dann wird mit 2,2 Teilen Essigsäure protoniert.

Prüfung des Bindemittels

Zur Prüfung als kationische Elektrotauchlacke werden durch Zugabe von Wasser aus den mit Säure versetzten Bindemitteln 10 %ige Dispersionen hergestellt. Unter Rühren wird zu jeweils 1 000 Teilen der jeweiligen Bindemitteldispersion 66 Teile einer Pigmentpaste zugesetzt, welche folgendermaßen hergestellt worden ist :
Pigmentpaste :
Nach Beispiel 1a) der DE-OS 3 121 765 wird ein Pastenbindemittel hergestellt. Dazu werden in einem Reaktionsgefäß 200 Teile Ethylenglykolmonobutylether auf 90 °C erwärmt. Dann wird binnen 2 Stunden eine Mischung aus 396 Teilen N-Vinylpyrrolidon, 204 Teilen Vinylpropionat und 1,2 Teilen Azobisisobutyronitril zugetropft. Abschließend wird 1 Stunde lang bei 90 °C nachpolymerisiert. Das resultierende Lösungspolymerisat hat einen K-Wert nach Fikentscher von 24. Der Festkörpergehalt der Copolymerisatlösung beträgt 76 %.

In einer Rührwerksmühle werden 250 Teile der obigen Copolymerisatlösung, 210 Teile Ethylenglykolmonobutylether, 555 Teile Ethylenglykolmonoethylether, 837 Teile Wasser, 1084 Teile Kaolin, 217 Teile basisches Bleisilikat, 145 Teile Ruß, 36 Teile Rutil und 3 000 Teile Glasperlen von einem Durchmesser von 2 mm 45 Minuten bei einer Drehzahl von 1 000 Umdrehungen/Minute gerührt. Nach dem Abtrennen der Glasperlen wird eine Schwarzpaste mit einem Festgehalt von 50,6 % erhalten.

Die Bäder werden dann 48 Stunden bei 30 °C gerührt. An kathodisch geschalteten, zinkphosphatierten Prüftafeln aus Stahl werden Lackfilme innerhalb von 2 Minuten bei der angegebenen Spannung abgeschieden und 20 Minuten bei 180 °C, bei 160 °C und bei 140 °C eingebrannt. Anschließend wird die Beständigkeit gegen Aceton durch 50 maliges Hin- und Herreiben mit einem acetongetränkten Wattebausch und die Elastizität in Form der Schlagtiefung geprüft. Die folgende Tabelle zeigt die Ergebnisse.

Ergebnisse der Bindemittelprüfung nach 2 Tagen Alterung bei 27°C

(17μm Schichtstärke)

| Bindemittel | pH | Umgriff nach Ford bei 17μm Außenschichtdicke | Acetonfestigkeit bei Einbrenntemp. (20min) | | | Schlagtiefung Nm | | |
|---|---|---|---|---|---|---|---|---|
| | | | 140°C | 150°C | 160°C | 140°C | 150°C | 160°C |
| Beispiel 3 | 8,3 | 20,5 (280 V) | 4 | 2 | 1 | 6,78 | 18,08 | 18,08 |
| | | | 1* | 1* | 1* | 18,08 | 18,08 | 18,08 |
| Beispiel 4 | 8,2 | 19,0 (260 V) | 4 | 2 | 1 | 2,26 | 9,04 | 9,04 |
| | | | 2* | 1* | 1* | 9,04 | 9,04 | 9,04 |
| Beispiel 5 | 8,2 | 21 (300 V) | 4 | 2 | 2 | 11,3 | 18,08 | 18,08 |
| | | | 2* | 2* | 1 | 18,08 | 18,08 | 18,08 |

*Bäder enthalten 50 ppm Mangan als Manganacetat
Acetonfestigkeit 1 sehr gut 6 ungenügend
Die Schlagtiefung wurde mit einem mandrel impact tester der Fa. Gardner nach ASTM D 2794 bestimmt.

**Patentansprüche**

1. Hitzehärtbare Überzugsmittel, dadurch gekennzeichnet, daß sie als Bindemittel enthalten ein Gemisch aus

(A) 50 bis 95 Gew.% eines Polyadditions-, Polykondensations- oder Polymerisationsprodukts mit einem mittleren Molekulargewicht $\bar{M}_n$ von 500 bis 10 000, welches im Mittel pro Molekül mindestens zwei OH- und/oder NH-Gruppen besitzt und

(B) 5 bis 50 Gew.% eines Umsetzungsproduktes aus einem Polyisocyanat und einem olefinisch ungesättigten Amin, welches eine sekundäre Aminogruppe und eine Methacrylamidgruppe oder Methacrylestergruppe trägt.

2. Überzugsmittel nach Anspruch 1, dadurch gekennzeichnet, daß sie als Komponente (A) ein Umsetzungsprodukt aus einem oder mehreren aromatischen oder aliphatischen Epoxidharzen und einem oder mehreren primären oder sekundären Aminen enthalten.

3. Überzugsmittel nach Anspruch 1, dadurch gekennzeichnet, daß sie als Komponente (A) ein Alkydharz enthalten.

4. Überzugsmittel nach Anspruch 1, dadurch gekennzeichnet, daß sie als Komponente (A) ein Umsetzungsprodukt aus phenolischen Mannichbasen und Epoxidharzen enthalten.

5. Überzugsmittel nach Anspruch 1, dadurch gekennzeichnet, daß sie als Komponente (A) ein Polyacrylat enthalten.

6. Überzugsmittel nach einem der Ansprüche 1 bis 5, dadurch gekennzeichnet, daß als Komponente (B) Umsetzungsprodukte aus Polyisocyanaten und Isopropylaminopropylmethacrylamid verwendet werden.

7. Überzugsmittel nach einem der Ansprüche 1 bis 6, dadurch gekennzeichnet, daß sie zusätzlich 0,001 bis 5 Gew.%, bezogen auf Bindemittel, Schwermetallsalze als Härtungskatalysatoren enthalten.

8. Verwendung der hitzehärtbaren Überzugsmittel nach einem der Ansprüche 1 bis 7, in wasserverdünnbarer, protonierter Form als Bindemittel für die kathodische Elektrotauchlackierung.

9. Ein wäßriges Lackbad für die kathodische Elektrotauchlackierung, dadurch gekennzeichnet, daß es 5 bis 30 Gew.% eines Überzugsmittels gemäß einem der Ansprüche 1 bis 7 enthält.

**Claims**

1. A heat-curable surface-coating agent which contains, as binder, a mixture of

(A) from 50 to 95 % by weight of a polyadduct, polycondensate or other polymer which has an average molecular weight $\bar{M}_n$ of from 500 to 10,000 and, per molecule, on average at least two OH or NH groups or OH and NH groups, and

(B) from 5 to 50 % by weight of a reaction product of a polyisocyanate and an olefinically unsaturated amine which carries a secondary amino group and a methacrylamide or methacrylate group.

2. A surface-coating agent as claimed in claim 1, which contains, as component (A), a reaction product of one or more aromatic or aliphatic epoxy resins and one or more primary or secondary amines.

3. A surface-coating agent as claimed in claim 1, which contains, as component (A), an alkyd resin.

4. A surface-coating agent as claimed in claim 1, which contains, as component (A), a reaction product of phenolic Mannich bases and epoxy resins.

5. A surface-coating agent as claimed in claim 1, which contains, as component (A), a polyacrylate.

6. A surface-coating agent as claimed in any of claims 1 to 5, wherein a reaction product of polyisocyanates and isopropylaminopropyl methacrylamide is used as component (B).

7. A surface-coating agent as claimed in any of claims 1 to 6, which additionally contains from 0.001 to 5 % by weight, based on binder, of heavy metal salts as hardening catalysts.

8. The use of a heat-curable surface-coating agent as claimed in any of claims 1 to 7, in water-dilutable, protonated form, as binder for cathodic electrocoating.

9. An aqueous cathodic electrocoating bath which contains from 5 to 30 % by weight of a surface-coating agent as claimed in any of claims 1 to 7.

**Revendications**

1. Matières de revêtement thermodurcissables, caractérisées par le fait qu'elles contiennent, comme liant, un mélange de

(A) 50 à 95 % en poids d'un produit de polyaddition, polycondensation ou polymérisation d'un poids moléculaire moyen $\bar{M}_n$ de 500 à 10 000, et qui possède, en moyenne, par molécule, au moins deux groupes OH et/ou NH, et

(B) 5 à 50 % en poids d'un produit de réaction d'un polyisocyanate et d'une amine insaturée oléfiniquement, et qui porte un groupe amino secondaire et un groupe méthacrylamide ou méthacrylester.

2. Matières de revêtement selon la revendication 1, caractérisées par le fait qu'elles contiennent, comme composant (A), un produit de réaction d'une ou de plusieurs résines époxydes aromatiques ou aliphatiques et d'une ou plusieurs amines primaires ou secondaires.

3. Matières de revêtement selon la revendication 1, caractérisées par le fait qu'elles contiennent, comme composant (A), une résine alkyde.

4. Matières de revêtement selon la revendication 1, caractérisées par le fait qu'elles contiennent, comme composant (A), un produit de réaction de bases de Mannich phénoliques et de résines époxydes.

5. Matières de revêtement selon la revendication 1, caractérisées par le fait qu'elles contiennent, comme composant (A), un polyacrylate.

6. Matières de revêtement selon l'une des revendications 1 à 5, caractérisées par le fait qu'on utilise, comme composant (B), des produits de réaction de polyisocyanates et d'isopropylaminopropylmétha-crylamide.

7. Matières de revêtement selon l'une des revendications 1 à 6, caractérisées par le fait qu'elles contiennent additionnellement, comme catalyseur de durcissement, 0,001 à 5 % en poids, par rapport au liant, de sels de métal lourd.

8. Utilisation des matières de revêtement thermodurcissables selon l'une des revendications 1 à 7, sous forme protonée, diluable dans l'eau, comme liant pour peinture par électro-immersion cathodique.

9. Bain de peinture aqueux pour la peinture par électroimmersion cathodique, caractérisé par le fait qu'il contient 5 à 30 % en poids d'une matière de revêtement selon l'une des revendications 1 à 7.